# EUROPÄISCHE PATENTSCHRIFT

(11) **EP 3 387 684 B1**
(45) Veröffentlichungstag und Bekanntmachung des Hinweises auf die Patenterteilung: **24.03.2021**
(21) Anmeldenummer: 16809798.8
(22) Anmeldetag: 09.12.2016
(51) Int. Cl.: H01M 2/10, H01M 10/6555

(54) **ENERGIESPEICHER FÜR KRAFTFAHRZEUGE**
ENERGY STORAGE DEVICE FOR VEHICLES
DISPOSITIF DE STOCKAGE D'ÉNERGIE POUR VÉHICULES

(30) Priorität: 10.12.2015 DE 102015224920
(43) Veröffentlichungstag der Anmeldung: 17.10.2018
(73) Patentinhaber: Volkswagen Aktiengesellschaft, 38440 Wolfsburg (DE)
(72) Erfinder: WESCHE, Frank, 38458 Velpke (DE); SCHAAR, Bastian, 38116 Braunschweig (DE); NOLTE, Oliver, 38116 Braunschweig (DE); VOIGT, Arne-Christian, 38104 Braunschweig (DE)
(74) Vertreter: Clarenbach, Carl-Philipp
(86) Internationale Anmeldenummer: PCT/EP2016/080532
(87) Internationale Veröffentlichungsnummer: WO 2017/098028

(56) Entgegenhaltungen:
- EP-A1- 2 413 397
- EP-A1- 3 291 330
- JP-A- 2012 524 371
- US-A1- 2011 256 446

## Beschreibung

Die Erfindung betrifft einen Energiespeicher, insbesondere Hochspannungsenergiespeicher, für Kraftfahrzeuge, mit einem mehrere aufeinander gestapelte Zelleinheiten aufweisenden Zellstapel, der mehrere Zellhalter aus Kunststoff aufweist, die jeweils zwischen zwei aufeinanderliegenden Zelleinheiten zum Halten und Ausrichten der Zelleinheiten angeordnet sind, und mit zumindest einem plattenförmigen Kühlkörper.

Energiespeicher der eingangs genannten Art sind aus dem Stand der Technik bekannt. Insbesondere in Zusammenhang mit der zunehmenden Elektrifizierung von Kraftfahrzeugen, die mit zunehmenden Maß auch im Bereich der Antriebsvorrichtungen erfolgt, steigt der Energiebedarf von Kraftfahrzeugen. Um den Bedarf an elektrischer Energie decken zu können, werden Hochspannungsenergiespeicher für Kraftfahrzeuge entwickelt und eingesetzt, die aus einer Vielzahl von miteinander elektrisch verbundenen Zelleinheiten bestehen. Bekannt ist es dabei, die Zelleinheiten aufeinander zu stapeln um einen Zellstapel oder einen Zellblock herzustellen, der eingehaust eine gut handhabbare Einheit bildet.

Aus der Offenlegungsschrift DE 10 2011 109 246 A1 geht beispielsweise ein Energiespeicher hervor. Um die Effizienz des Energiespeichers zu erhöhen und den Betrieb sicher gewährleisten zu können, ist es dabei außerdem vorgesehen, dem Zellstapel einen oder mehrerer Kühlkörper zuzuordnen, die beispielsweise von einer Kühlflüssigkeit durchströmt werden, um Wärme aus dem Zellstapel abzuführen.

Die Offenlegungsschrift EP 2 413 397 A1 offenbart einen Energiespeicher der gattungsgemäßen Art. Der Energiespeicher weist mehrere stapelbare Vorrichtungen auf, die jeweils einen Kühlkörper und einen Zellhalter aufweisen, und die dazu ausgebildet sind, jeweils eine flexible Zelleinheit aufzunehmen, so dass jeder Zelleinheit des Energiespeichers jeweils eine Vorrichtung beziehungsweise ein Kühlkörper zugeordnet ist.

Die Offenlegungsschrift JP 2012 524 371 A offenbart einen Energiespeicher, der formschlüssig miteinander verbindbare Rahmenelemente aufweist. Dabei ist vorgesehen, dass zwischen zwei formschlüssig verbundenen Rahmenelementen des Energiespeichers jeweils zwei Zelleinheiten angeordnet sind, und dass zwischen zwei Rahmenelementen des Energiespeichers, die nicht formschlüssig miteinander verbunden sind, jeweils ein Kühlkörper angeordnet ist.

Die Offenlegungsschrift US 2011/0256446 A1 offenbart einen Energiespeicher, der miteinander verbundene Rahmenelemente aufweist. Dabei ist vorgesehen, dass zwischen zwei benachbarten Rahmenelementen zwei Zelleinheiten angeordnet sind, und dass zwischen den beiden Zelleinheiten ein Kühlkörper angeordnet ist.

Der Erfindung liegt die Aufgabe zugrunde, einen kompakten Energiespeicher zu schaffen, der auf kostengünstige Art und Weise eine vorteilhafte Kühlung und eine einfache Montage gewährleistet.

Die der Erfindung zugrundeliegende Aufgabe wird durch einen Energiespeicher mit den Merkmalen des Anspruchs 1 gelöst. Dieser weist den Vorteil auf, dass eine Kühlung des Energiespeichers nicht nur an einer Außenseite des Zellstapels erfolgt, sondern auch innerhalb des Zellstapels. Dabei wird zumindest ein Kühlkörper auf einfache Art und Weise bei der Montage des Zellstapels in den Zellstapel integriert. Erfindungsgemäß ist hierzu vorgesehen, dass an wenigstens einer der Zelleinheiten der zumindest eine Kühlkörper innerhalb des Zellstapels angeordnet ist. Damit liegt der zumindest eine Kühlkörper zwischen zwei benachbarten Zelleinheiten innerhalb des Zellstapels und ist insbesondere einer der beiden benachbarten Zelleinheiten derart zugeordnet, dass er an dieser angeordnet, insbesondere befestigt ist. Hierdurch wird eine vorteilhafte Kühlung des Energiespeichers im Inneren des Zellstapels vorteilhaft ermöglicht.

Weiterhin ist bevorzugt vorgesehen, dass an mehreren Zelleinheiten des Zellstapels jeweils ein plattenförmiger Kühlkörper innerhalb des Zellstapels angeordnet ist. Damit ist der Zellstapel an mehreren Stellen innerhalb des Zellstapels, also zwischen benachbarten Zelleinheiten vorteilhaft kühlbar beziehungsweise gekühlt. Hierdurch wird die Gesamtkühlung des Zellstapels verbessert.

Insbesondere ist jeweils ein Zellhalter an einem von zwei Stirnenden eines Kühlkörpers befestigt, sodass der jeweilige Kühlkörper zwischen zwei aufeinanderliegenden Zelleinheiten angeordnet ist. Dadurch ist der jeweilige Kühlkörper in eine Zelleinheit durch die Befestigung an dem Zellhalter integriert, wodurch insbesondere eine Montageeinheit gebildet wird, die eine einfache Montage von Zelleinheit und Kühlkörper in dem Zellstapel erlaubt.

Erfindungsgemäß ist vorgesehen, dass nur an jeder zweiten Zelleinheit des Zellstapels jeweils einer der Kühlkörper angeordnet ist, sodass jede Zelleinheit des Zellstapels von jeweils nur einem Kühlkörper direkt kühlbar ist. Somit ist gewährleistet, dass jede Zelleinheit durch einen Kühlkörper von einer Seite kühlbar ist. Hierdurch kann bereits eine ausreichende Kühlung des Zellstapels in vorteilhafter Weise erreicht werden. Zum einen ist sichergestellt, dass jede Zelleinheit gekühlt ist beziehungsweise kühlbar ist, und zum anderen wird der Gesamtbauraum gering gehalten, weil nur zwischen jedem zweiten Paar von aufeinanderliegenden Zelleinheiten ein Kühlkörper angeordnet ist. Hierdurch ergibt sich ein kompakter und dennoch ausreichend gekühlter beziehungsweise kühlbarer Zellstapel.

Der jeweilige Kühlkörper ist insbesondere aus Aluminium gefertigt und weist eine Kontur auf, die im Wesentlichen der Kontur der Zelleinheiten entspricht, sodass der Zellstapel eine homogene Form aufweist. Insbesondere weist der Kühlkörper einen oder mehrere Flüssigkeitskanäle auf, die zur Flüssigkeitskühlung des Kühlkörpers genutzt werden, um die Wärme vorteilhaft aus dem Zellstapel abzutransportieren. Hierdurch wird eine besonders effiziente Kühlung erreicht, wobei der Energiespeicher beliebig skalierbar ist, indem die Anzahl der Zelleinheiten und der Kühlkörper beziehungsweise der Montageeinheiten aus Zelleinheit, Kühlkörper und Zellhaltern frei wählbar ist. Die Zelleinheiten sind insbesondere als Folienzelle ausgebildet. Der Zellstapel kann somit eine beliebige Anzahl von Schichten aufweisen und somit auf einfache Art und Weise an den jeweiligen Anwendungsfall angepasst werden. Auch kann die Kühlleistung durch Hinzufügen von Kühlkörpern an der Außenseite des Zellstapels erhöht werden. Durch die aus Kunststoff gefertigten Zellhalter wird die Positionierung der Zelleinheiten und der Kühlkörper zueinander auf kostengünstige und einfache Art und Weise gewährleistet.

Gemäß einer bevorzugten Weiterbildung der Erfindung ist vorgesehen, dass die Zellhalter an den jeweiligen Kühlkörper angespritzt sind. Dadurch bildet jeweils ein Kühlkörper mit zwei Zellhaltern an seinen beiden Stirnenden eine einfach handhabbare Einheit, die bei der Montage des Zellstapels einfach als weitere Schicht des Zellstapels nutzbar ist. Dadurch, dass die Zellhalter an den Kühlkörper angespritzt sind, ergibt sich ein besonders sicherer Halt und eine sichere Bindung zwischen Zellhalter und Kühlkörper. Dies ist insbesondere dann von Vorteil, wenn der Kühlkörper die oben genannten Flüssigkeitskanäle aufweist, die bevorzugt von zumindest einem der Zellhalter fortgeführt oder mitgebildet werden. Hierdurch können die Flüssigkeitskanäle auf einfache Art und Weise aus dem Zellstapel des oder der Zellhalter herausgeführt und von außen kontaktiert werden. Durch das Anspritzen des Zellhalters an den Kühlkörper wird die sichere fluidtechnische Verbindung auch dauerhaft gewährleistet.

Weiterhin ist bevorzugt vorgesehen, dass die Zellhalter zusammen mit dem jeweiligen Kühlkörper eine werkzeugfallende Kühleinheit bilden. Insbesondere durch die Ausbildung als angespritzte Zellhalter ist dies möglich. Durch die Ausbildung als werkzeugfallende Kühleinheit wird die Herstellung von Kühlkörper und Zellhaltern vorteilhafterweise vereinfacht und beschleunigt.

Gemäß einer bevorzugten Weiterbildung der Erfindung ist vorgesehen, dass die jeweilige Kühleinheit wannenförmig zur zumindest bereichsweisen Aufnahme jeweils einer der Zelleinheiten ausgebildet ist. Die Kühleinheiten bieten aufgrund ihrer Wannenform eine vorteilhafte Aufnahme/Vertiefung für eine darin einzusetzende Zelleinheit. Dadurch wird eine sichere Halterung der Zelleinheit an dem Kühlkörper beziehungsweise einer Kühleinheit gewährleistet. Darüber hinaus wird durch die wannenförmige Gestaltung der Kühleinheit der Vorteil erreicht, dass die Zelleinheiten bereichsweise auch seitlich durch den Kühlkörper gekühlt werden.

Gemäß einer vorteilhaften Weiterbildung der Erfindung ist weiterhin vorgesehen, dass zumindest einer der Zellhalter, insbesondere alle an einer Stirnseite des Zellstapels angeordneten Zellhalter wenigstens eine randseitige Aussparung aufweisen, durch welche jeweils zumindest ein elektrisch leitfähiges Kontaktelement der jeweiligen Zelleinheit durch den Zellhalter hindurchragt. Die elektrische Kontaktierung der Zelleinheiten wird somit in vorteilhafter Weise dadurch erreicht, dass zumindest ein elektrisch leitfähiges Kontaktelement der Zelleinheit durch die Aussparung des jeweiligen Zellhalters hindurchgeführt ist, sodass die Zelleinheit von außerhalb des Zellstapels elektrisch kontaktierbar ist.

Weiterhin ist bevorzugt vorgesehen, dass die Zelleinheiten in der jeweiligen Kühleinheit eingeklebt sind. Insbesondere sind die Zelleinheiten in die jeweilige Kühleinheit eingesetzt und dort mittels eines Klebemittels, insbesondere Thermokleber, zellkörperflächig eingeklebt. Durch das zellkörperflächige Vorsehen des Thermoklebers oder eines anderen Klebemittels wird die jeweilige Zelleinheit sicher an dem jeweiligen Kühlkörper gehalten. Durch das Nutzen von Thermokleber wird darüber hinaus eine vorteilhafte Wärmeleitfähigkeit beziehungsweise Wärmeableitung von der Zelleinheit zu dem Kühlkörper gewährleistet. Durch das Verkleben bilden die Zelleinheiten außerdem mit der jeweiligen Kühleinheit jeweils eine vorteilhafte Montageeinheit des Zellstapels. Zur Herstellung des Energiespeichers werden einfach mehrere dieser Montageeinheiten aufeinandergestapelt, wobei das Ausrichten und Halten aneinander durch die Zellhalter gewährleistet wird.

Insbesondere ist vorgesehen, dass die Zellhalter derart hoch ausgebildet sind, dass eine Zelleinheit zu einem darüber liegenden Kühlkörper beabstandet angeordnet ist. Sind also zwei der oben genannten Montageeinheiten aufeinandergelegt beziehungsweise gestapelt, so ist die unten liegende Zelleinheit beabstandet zu dem oben liegenden Kühlkörper angeordnet. Dadurch ergibt sich der Vorteil, dass die Zelleinheit im Betrieb einen Bewegungsspielraum zur Verfügung hat, der insbesondere ein thermisch bedingtes Wachsen/Ausdehnen der Zelleinheit ermöglicht.

Weiterhin ist bevorzugt vorgesehen, dass der Energiespeicher ein plattenförmiges Kontaktierungsteil aufweist, das der ersten Stirnseite des Zellstapels zugeordnet ist und mehrere schlitzförmige Aussparungen zur Aufnahme jeweils zumindest eines der Kontaktelemente aufweist. Das Kontaktierungsteil kann somit einfach montiert werden, indem es der Stirnseite des Zellstapels zugeführt wird, an welcher die elektrischen Kontaktelemente der Zelleinheiten angeordnet sind und die Zellhalter wie zuvor beschrieben durchdringen. Das Kontaktierungsteil ist somit senkrecht zu den Zelleinheiten beziehungsweise Kühleinheiten ausgerichtet und bildet eine Seitenwand des Zellstapels. Die Kontaktelemente werden einfach in die schlitzförmigen Aussparungen eingeführt und können dadurch einfach elektrisch kontaktiert werden, um die Zelleinheiten miteinander und mit Versorgungsanschlüssen des Zellstapels zu verbinden. Je nach Ausbildung des Kontaktierungsteils können dabei unterschiedliche Verschaltungen realisiert werden. Weil die Höhe und Anordnung der Montageeinheiten des Zellstapels durch die insbesondere in der Höhe gleich ausgebildeten Zellhalter definiert werden, ist gewährleistet, dass die Kontaktierungsteile der Zelleinheiten stets auf der richtigen Höhe der schlitzförmigen Aussparungen des Kontaktierungsteils liegen.

Weiterhin ist bevorzugt vorgesehen, dass das Kontaktierungsteil einen Kunststoffrahmen und darin/daran angeordnete elektrisch leitfähige Kontaktteile, insbesondere Kontaktschienen, aufweist. Das Kontaktierungsteil ist also mehrteilig ausgebildet und weist einen elektrisch nicht leitfähigen Rahmen und darin angeordneten, elektrisch leitfähige Kontaktteilen auf, welche die Verschaltung der Zelleinheiten miteinander realisieren. Je nachdem, wie die Kontaktteile angeordnet und/oder ausgebildet sind, ergeben sich dabei unterschiedliche Verschaltungen. Dadurch ist es auf einfache Art und Weise möglich, durch Wahl und Anordnung der Kontaktteile unterschiedliche Verschaltungen zu realisieren.

Insbesondere ist vorgesehen, dass die Kontaktteile von dem Kunststoffrahmen umspritzt sind. Dadurch ergibt sich eine besonders sichere Verbindung von Kontaktteilen und Kunststoffrahmen, die auch höheren Belastungen standhält. Insbesondere wird dadurch außerdem eine werkzeugfallende Kontakteinheit zur Verfügung gestellt, die eine einfache und kostengünstige Montage erlaubt.

Im Folgenden soll die Erfindung anhand eines Ausführungsbeispiels näher erläutert werden. Dazu zeigen:
- Figur 1: einen Energiespeicher in einer perspektivischen Explosionsdarstellung,
- Figur 2: einen Zellstapel des Energiespeichers in einer perspektivischen Darstellung,
- Figur 3: eine Kühleinheit des Zellstapels in einer perspektivischen Darstellung,
- Figur 4: eine Detailansicht einer Montageeinheit in einer perspektivischen Darstellung,
- Figur 5: eine Schnittdarstellung des Zellstapels, (nicht gemäss der Efindung)
- Figur 6: ein Kontaktierungsteil des Energiespeichers in einer perspektivischen Darstellung, und
- Figur 7: den Zellstapel aus Figur 5 gemäß i der Erfindung.

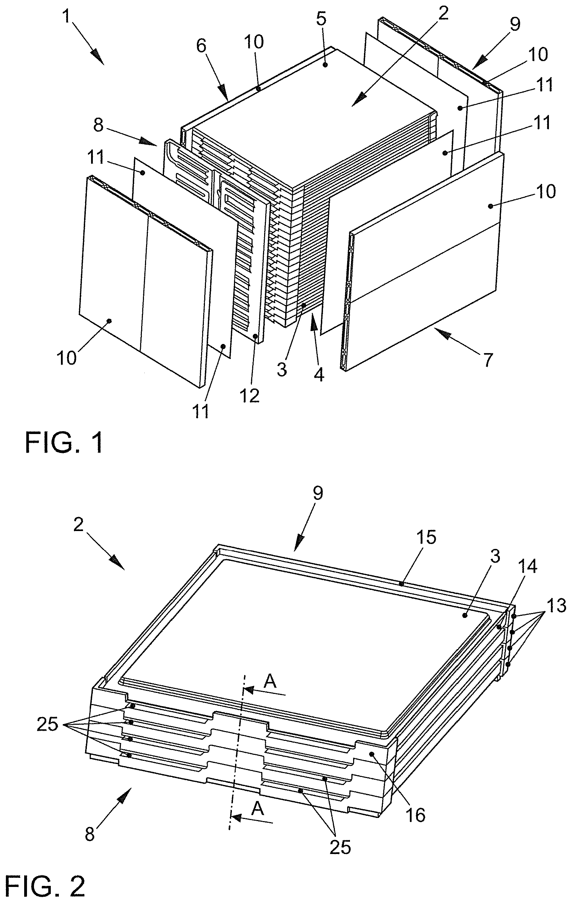

Figur 1 zeigt in einer perspektivischen Explosionsdarstellung einen HochspannungsEnergiespeicher 1, der insbesondere für den Einsatz in einem Kraftfahrzeug ausgebildet ist. Der Energiespeicher 1 weist einen Zellstapel 2 auf, der von einer Vielzahl aufeinander gestapelten, plattenförmigen Zelleinheiten 3, die insbesondere als Folienzellen ausgebildet sind, gebildet ist. Der Zellstapel 2 weist eine rechteckförmige Grundfläche auf und aufgrund der gestapelten Anordnung eine würfelförmige Kontur. Der Zellstapel 2 weist einen Boden 4, einen Deckel 5, zwei einander gegenüberliegenden Längsseiten 6 und 7 sowie zwei einander gegenüberliegende Stirnseiten 8 und 9 auf. Den Längsseiten 6, 7 sowie den Stirnseiten 8, 9 ist jeweils ein Kühlkörper 10 in Form einer Kühlplatte aus einem Werkstoff mit guter Wärmeleitfähigkeit, insbesondere Aluminium, zugeordnet. Der jeweilige Kühlkörper 10 weist dabei mehrere Strömungskanäle für eine Kühlflüssigkeit auf, mittels welcher von dem Zellstapel 2 erzeugte Wärme abgeleitet werden kann. Zwischen dem jeweiligen Kühlkörper 10 und dem Zellstapel 2 ist außerdem eine elektrisch isolierende, wärmeleitfähiges Schutzelement 11 angeordnet. Die Kühlkörper 10 schließen insbesondere mit dem Boden 4 und dem Deckel 5 ab, um den Zellstapel 2 zwischen sich vor äußeren Einflüssen geschützt einzuschließen. Der Stirnseite 8 ist außerdem ein Kontaktierungsteil 12 zugeordnet, das zwischen dem Schutzelement 11 und der Stirnseite 8 des Zellstapels 2 liegt.

Figur 2 zeigt eine vergrößerte Teilansicht des Zellstapels 2. Der Zellstapel 2 wird aus mehreren Montageeinheiten 13 gebildet, die jeweils einen Kühlkörper 17, eine der Zelleinheiten 3 sowie zwei Zellhalter 15, 16 umfassen. Die Zellhalter 15, 16 sind dabei an jeweils einer der Stirnseiten 8, 9 des Zellstapels 2 beziehungsweise der Zelleinheiten 3 angeordnet und dienen dazu, die übereinander gestapelten Montageeinheiten 13 aneinander auszurichten und zu halten.

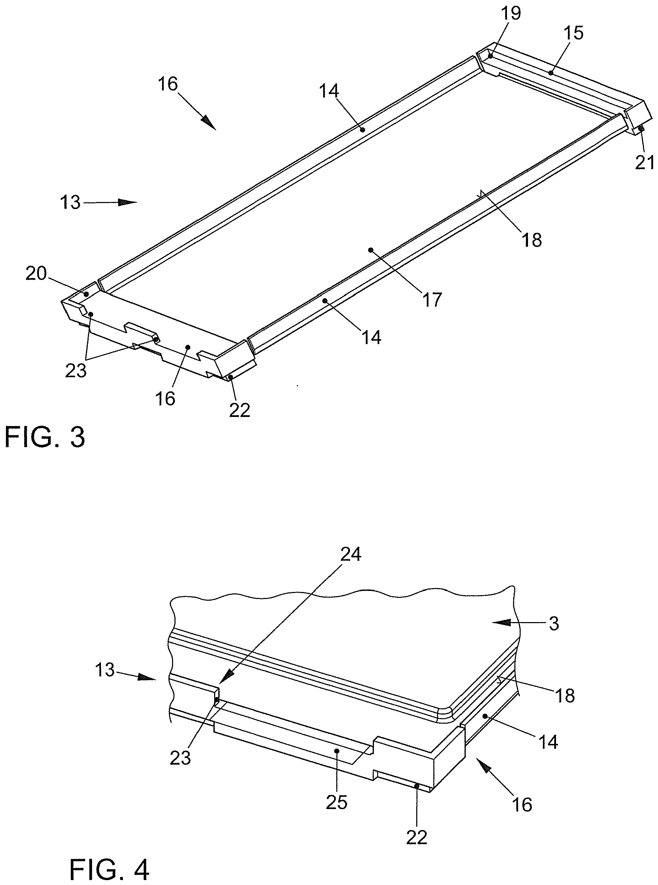

Figur 3 zeigt in einer perspektivischen Darstellung eine Kühleinheit 16 einer der Montageeinheiten 13. Die Kühleinheit 16 weist einen Kühlkörper 17 auf, sowie die beiden Zellhalter 15 und 16. Die Kühleinheit 16 ist als werkzeugfallende Einheit ausgebildet, wobei die aus Kunststoff gefertigten Zellhalter 15, 16 an den insbesondere aus Aluminium gefertigten Kühlkörper 17 angespritzt sind. Dabei sind die Zellhalter 15, 16 und der Kühlkörper 17 derart ausgebildet, dass die Kühleinheit 16 insgesamt wannenförmig ausgebildet ist, sodass Seitenwände 14 entstehen, und insoweit eine Aufnahme 18 zur Aufnahme der jeweiligen Zelleinheit 3 zur Verfügung steht. Die Zellhalter 15,16 sind dabei an jeweils einem Stirnende 8' beziehungsweise 9' des Kühlkörpers, die die Stirnseiten 8 beziehungsweise 9 des Zellstapels 2 bilden, zu geordnet.

Die Zellhalter 15, 16 sind derart ausgebildet, dass sie mit darüber liegenden Zellhaltern 15 beziehungsweise 16 und/oder mit darunter liegenden Zellhaltern 15, 16 formschlüssig ineinander greifen, um die Montageeinheiten 13 zueinander auszurichten. Dazu ist vorliegend vorgesehen, dass die Zellhalter 15, 16 an ihrer Oberseite jeweils eine Aussparung 19 beziehungsweise 20 aufweisen, und an ihrer Unterseite jeweils eine mit der Aussparung 19 beziehungsweise 20 korrespondierenden Vorsprung 21, 22. Werden die Montageeinheiten 13 aufeinander gestapelt, so wird der jeweilige Vorsprung 21, 22 in die jeweilige Aufnahmeaussparung 19, 20 eingesteckt, sodass die Zellhalter 15, 16 formschlüssig aneinander gehalten sind.

Während der Zellhalter 15, der der Stirnseite 9 zugeordnet ist, eine geschlossene Seitenwand aufweist, weist der Zellhalter 16, der der Stirnseite 8 zugeordnet ist, vorliegend zwei Aussparungen 23 auf, auf deren Funktion weiter unten näher eingegangen werden soll.

Figur 4 zeigt dazu in einer perspektivischen Detailansicht die Kühleinheit 16, die nun mit einer Zelleinheit 3 verbunden wurde. Dazu ist die Folienzelle beziehungsweise die Zelleinheit 3 in die Aufnahme 18 der Kühleinheit 16 eingelegt und mit einem Klebemittel, insbesondere einem Thermokleber, also einem Klebemittel mit guter Wärmeleitfähigkeit, darin verklebt. Das Klebemittel 24 ist dabei zellkörperflächig vorhanden, sodass es die gesamte Folienzelle der Zelleinheit 3 zumindest bereichsweise bedeckt. Dabei ragt das Klebemittel auch bis an die durch die wannenförmige Gestaltung des Kühlkörpers 17 gebildeten Seitenwände des Kühlkörpers 17 heran. Optional ist zwischen der freien Oberseite der Zelleneinheit 3 und dem darüber liegenden Kühlkörper 18 der darüber liegenden Montageeinheit 13 beziehungsweise Zelleneinheit 3 eine flexibel verformbare Thermoleitmatte, beispielsweise in der Art der zuvor beschriebenen Schutzelemente 11, angeordnet. Hierdurch wird gewährleistet, dass Wärme von der Zelleinheit 3 auch in den darüber liegenden Kühlkörper 17 abgeleitet wird, wobei die flexible Verformbarkeit der Thermoleitmatte der unten liegenden Zelleinheit 3 eine Verformung beziehungsweise ein Atmen ermöglicht. Weil die Zelleinheit 3 außerdem auf dem Boden des Kühlkörpers 17 aufliegt, erfolgt dort ein großflächiger Wärmeübergang. Auch der jeweilige Kühlkörper 17 der Kühleinheiten 13 weist bevorzugt ein oder mehrere Flüssigkeitskanäle zur Durchführung eines Kühlmittels auf, um die Wärme von der Zelleinheit 3 vorteilhaft ableiten zu können. Jede der Zelleinheiten 3 weist außerdem wenigstens ein, vorliegend zwei, elektrisch leitfähige Kontaktelemente 25 auf, die der Stirnseite 8 zugewandt sind. Dabei sind die Kontaktelemente 25 und die Aussparungen 23 des jeweiligen Zellhalters 16 derart ausgebildet, dass die Kontaktelemente 25 durch die Aussparungen 23 hindurchragen und damit von der Stirnseite 8 des Zellstapels 2 beziehungsweise der Montageeinheit 13 vorstehen, wie in Figur 4 gezeigt. Die Kontaktelemente 25 sind insbesondere als flache Kontaktzungen ausgebildet. Die Zellhalter 16 und auch 15 gewährleisten somit auch eine korrekte Positionierung, Anordnung und Ausrichtung der Kontaktelemente 25, die ein sicheres Zusammenwirken mit dem Kontaktierungsteil 12 gewährleisten.

Werden mehrere derartiger Montageeinheiten 13 aufeinander gestapelt, um einen Zellstapel 2 zu bilden, wie insbesondere in Figur 2 gezeigt, so ergibt sich dadurch, dass an der Stirnseite 8 mehrere übereinander liegende elektrisch leitfähige Kontaktelemente 25 der übereinander gestapelten Zelleinheiten von der Stirnseite 8 zur Kontaktierung vorstehen.

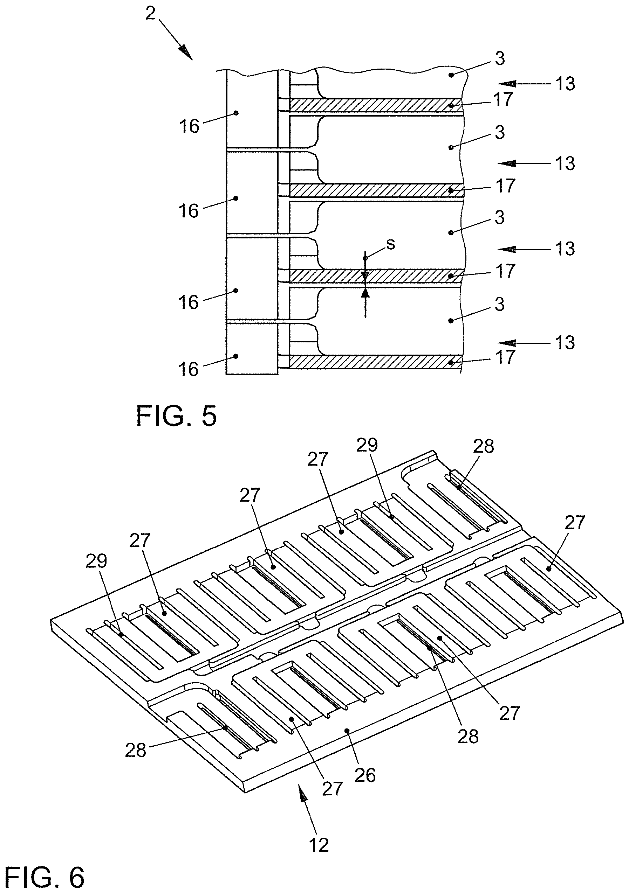

Figur 5 zeigt eine Schnittdarstellung durch den Zellstapel gemäß der Linien A-A aus Figur 2. Dabei sind die aufeinander gestapelten Montageeinheiten 13 zu erkennen, die durch die Zellhalter 16 an der Stirnseite 8 aufeinander liegend gehalten sind. Die Zelleinheiten 3 liegen dabei auf dem jeweiligen Kühlkörper 17 auf. Die Zellhalter 16 sind dabei derart hoch ausgebildet, dass zwischen der jeweiligen Zelleinheit 3 und dem darüber liegenden Kühlkörper 17 der darüber liegenden Montageeinheit 13 ein Abstand s verbleibt. Dieser Abstand gewährleistet, dass die Zelleinheiten 3 im Betrieb "Atmen" können. Dadurch wird sichergestellt, dass bei hoher Beanspruchung, die thermische Belastung der Zelleinheiten 3, die auch zu einer Vergrößerung der jeweiligen Zelleinheit 3 führen kann, nicht dazu führt, dass Spannungen in dem Zellstapel 2 auftreten.

Figur 6 zeigt in einer perspektivischen Draufsicht das Kontaktierungsteil 12 des Energiespeichers 1. Das Kontaktierungsteil 12 weist einen Kunststoffrahmen 26 auf, in welchem mehrere Kontaktteile 27, die elektrisch leitfähig ausgebildet sind, gehalten sind. Der Rahmen 26 weist mehrere schlitzförmige Aussparungen 28 auf. Die Kontaktteile 27 weisen damit korrespondierende Aussparungen 29 auf. Wird das Kontaktteil 12 nun an die Stirnseite 8 des Zellstapels 2 angesetzt, wie in Figur 1 gezeigt, so werden die Kontaktelemente 25 der Zelleinheiten 3 in die schlitzförmigen Aussparungen 28, 29 des Kontaktierungsteils 12 eingeführt. Dies wird insbesondere dadurch erreicht, dass der Abstand zwischen den benachbarten schlitzförmigen Aussparungen 28 dem Abstand der Montageeinheiten 13 zueinander entspricht. Je nach Anordnung und Ausbildung der Kontaktelemente 27 ergeben sich dann automatisch unterschiedliche Verschaltungen zwischen den Montageeinheiten 13 beziehungsweise den Zelleinheiten 3. Dadurch, dass die Kontaktteile 27 ebenfalls schlitzförmige Aussparungen 29 aufweisen, werden die Kontaktelemente 25 in diese eingeführt und damit elektrisch berührungskontaktiert. Insbesondere ist vorgesehen, dass die Kontaktelemente 25 in den Aussparungen 29 mit dem jeweiligen Kontaktteil 27 verschweißt werden, um einen dauerhaft guten elektrischen Kontakt zu gewährleisten.

Das Kontaktierungsteil 12 ist ebenfalls als werkzeugfallendes Element ausgebildet, wobei hierzu die Kontaktteile 27 von dem Kunststoff-Rahmen 26 umspritzt sind. Dadurch ist außerdem auch eine sichere Anordnung und Befestigung der Kontaktteile 27 dauerhaft und sicher gewährleistet.

Durch den hier vorgestellten Energiespeicher 1 wird somit eine einfache Montage zur Verfügung gestellt, sowie ein Energiespeicher 1, der eine vorteilhafte Wärmeabfuhr gewährleistet. Dadurch, dass zwischen zwei benachbarten beziehungsweise aufeinander liegenden Zelleinheiten 13 jeweils ein Kühlkörper 17 angeordnet ist beziehungsweise liegt, erfolgt eine Wärmeabfuhr auch innerhalb des Zellstapels 2, wodurch die Kapazität beziehungsweise Leistungsfähigkeit des Energiespeichers 1 im Vergleich zu bekannten Energiespeichern gesteigert wird.

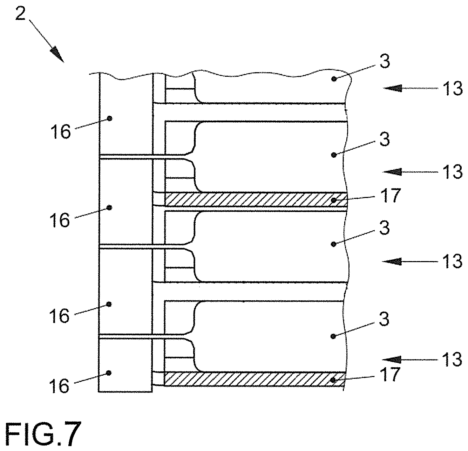

Figur 7 zeigt ein Ausführungsbeispiel des Zellstapels 2 gemäss der Erfindung, das sich von dem in Figur 5 gezeigten Ausführungsbeispiel dadurch unterscheidet, dass nicht zwischen allen benachbarten Zelleinheiten 3 jeweils ein Kühlkörper 17 angeordnet ist. Stattdessen ist nur an jeder zweiten der Zelleinheiten 3 jeweils ein Kühlkörper 17 angeordnet beziehungsweise nur zwischen jedem zweiten Paar von aufeinanderliegenden Zelleinheiten ein Kühlkörper 17 vorhanden. Dadurch wird die Anzahl von Kühlkörpern 17 im Vergleich zum dem Ausführungsbeispiel von Figur 5 zwar verringert, jedoch ergibt sich der Vorteil, dass der Zellstapel 2 insgesamt kompakter gebaut werden kann.

### Bezugszeichenliste

- 1: Energiespeicher
- 2: Zellstapel
- 3: Zelleinheit
- 4: Boden
- 5: Deckel
- 6: Längsseite
- 7: Längsseite
- 8: Stirnseite
- 9: Stirnseite
- 10: Kühlkörper
- 11: Schutzelement
- 12: Kontaktierungsteil
- 13: Montageeinheit
- 14: Seitenwand
- 15: Zellhalter
- 16: Zellhalter
- 17: Kühlkörper
- 18: Aufnahme
- 19: Aussparung
- 20: Aussparung
- 21: Vorsprung
- 22: Vorsprung
- 23: Aussparung
- 24: Klebemittel
- 25: Kontaktelement
- 26: Rahmen
- 27: Kontaktteil
- 28: Aussparung
- 29: Aussparung

## Patentansprüche

1. Energiespeicher (1), insbesondere Hochspannungsenergiespeicher, für Kraftfahrzeuge, mit einem mehrere aufeinander gestapelte Montageeinheiten (13) aufweisenden Zellstapel (2), wobei jede Montageeinheit (13) jeweils eine Zelleinheit (3) sowie zwei Zellhalter (15,16) aus Kunststoff aufweist, wobei die Zellhalter (15,16) jeweils zwischen zwei aufeinanderliegenden Zelleinheiten (3) zum Halten und Ausrichten der gestapelten Zelleinheiten (3) an jeweils einer Stirnseite (8,9) der Zelleinheiten (3) angeordnet sind, und mit zumindest einem plattenförmigen Kühlkörper (10,17), wobei an wenigstens einer der Zelleinheiten (3) der zumindest eine Kühlkörper (17) innerhalb des Zellstapels (2) angeordnet ist, **dadurch gekennzeichnet, dass** nur an jeder zweiten Zelleinheit (3) des Zellstapels (2) einer der Kühlkörper (17) angeordnet ist, sodass nur jede zweite der Montageeinheiten (13) einen Kühlkörper (17) aufweist und jede Zelleinheit (3) des Zellstapels (2) von jeweils nur einem Kühlkörper (17) direkt kühlbar ist.

2. Energiespeicher nach Anspruch 1, **dadurch gekennzeichnet, dass** an mehreren Zelleinheiten (3) jeweils ein plattenförmiger Kühlkörper (17) innerhalb des Zellstapels angeordnet ist.

3. Energiespeicher nach einem der Ansprüche 1 und 2, **dadurch gekennzeichnet, dass** jeweils ein Zellhalter (15,16) an einem von zwei Stirnenden (8',9') eines der Kühlkörper (17) befestigt ist, sodass der jeweilige Kühlkörper (17) zwischen zwei aufeinanderliegenden Zelleinheiten angeordnet ist.

4. Energiespeicher nach einem der vorhergehenden Ansprüche, **dadurch gekennzeichnet, dass** die Zellhalter (15,16) an den jeweiligen Kühlkörper (17) angespritzt sind.

5. Energiespeicher nach einem der vorhergehenden Ansprüche, **dadurch gekennzeichnet, dass** die Zellhalter (15,16) zusammen mit dem jeweiligen Kühlkörper (17) eine werkzeugfallende Kühleinheit (13) bilden.

6. Energiespeicher nach einem der vorhergehenden Ansprüche, **dadurch gekennzeichnet, dass** die Kühleinheit (13) wannenförmig zur zumindest bereichsweisen Aufnahme jeweils einer Zelleinheit (3) ausgebildet ist.

7. Energiespeicher nach einem der vorhergehenden Ansprüche, **dadurch gekennzeichnet, dass** zumindest einer der Zellhalter (16), insbesondere alle einer ersten Stirnseite (8) des Zellstapels (2) zugeordnete Zellhalter (16), wenigstens eine randseitige Aussparung (23) aufweisen, durch welche jeweils zumindest ein elektrisch leitfähiges Kontaktelement (25) der jeweiligen Zelleinheit (3) hindurchragt.

8. Energiespeicher nach einem der vorhergehenden Ansprüche, **dadurch gekennzeichnet, dass** die Zelleinheiten (3) in der jeweiligen Kühleinheit (16) eingeklebt sind.

9. Energiespeicher nach einem der vorhergehenden Ansprüche, **gekennzeichnet durch** wenigstens ein plattenförmiges Kontaktierungsteil (12), das der ersten Stirnseite (8) des Zellstapels (2) zugeordnet ist und mehrere insbesondere schlitzförmige Aussparungen (28,29) zur Aufnahme jeweils eines der Kontaktelemente (25) aufweist.

10. Energiespeicher nach einem der vorhergehenden Ansprüche, **dadurch gekennzeichnet, dass** das Kontaktierungsteil (12) einen Kunststoffrahmen (26) und mehrere darin/daran angeordnete, elektrisch leitfähige Kontaktteile (27) aufweist.

11. Energiespeicher nach einem der vorhergehenden Ansprüche, **dadurch gekennzeichnet, dass** die Kontaktteile (27) von dem Kunststoffrahmen (26) umspritzt sind.

12. Energiespeicher nach einem der vorhergehenden Ansprüche, **dadurch gekennzeichnet, dass** die Zellhalter (15,16) derart hoch ausgebildet sind, dass eine Zelleinheit (3) zu einem darüber liegenden Kühlkörper (17) beabstandet ist.

## Claims

1. Energy store (1), in particular high-voltage energy store, for motor vehicles, comprising a cell stack (2) having a plurality of assembly units (13) that are stacked one on the other, wherein each assembly unit (13) has in each case one cell unit (3) and two cell holders (15, 16) composed of plastic, wherein the cell holders (15, 16) are in each case arranged between two cell units (3) that are situated one on the other for holding and orienting the stacked cell units (3) on in each case one end side (8, 9) of the cell units (3), and comprising at least one plate-like heat sink (10, 17), wherein the at least one heat sink (17) is arranged within the cell stack (2) on at least one of the cell units (3), **characterized in that** one of the heat sinks (17) is arranged only on every second cell unit (3) of the cell stack (2), so that only every second one of the assembly units (13) has a heat sink (17) and each cell unit (3) of the cell stack (2) can be directly cooled by in each case only one heat sink (17).

2. Energy store according to Claim 1, **characterized in that** in each case one plate-like heat sink (17) is arranged within the cell stack on a plurality of cell units (3).

3. Energy store according to either of Claims 1 and 2, **characterized in that** in each case one cell holder (15, 16) is fastened to one of two ends (8', 9') of one of the heat sinks (17), so that the respective heat sink (17) is arranged between two cell units which are situated one on the other.

4. Energy store according to one of the preceding claims, **characterized in that** the cell holders (15, 16) are injection-moulded onto the respective heat sink (17).

5. Energy store according to one of the preceding claims, **characterized in that** the cell holders (15, 16), together with the respective heat sink (17), form an off-tool cooling unit (13).

6. Energy store according to one of the preceding claims, **characterized in that** the cooling unit (13) is designed in a trough-like manner for receiving in each case one cell unit (3) at least in regions.

7. Energy store according to one of the preceding claims, **characterized in that** at least one of the cell holders (16), in particular all of the cell holders (16) that are associated with a first end side (8) of the cell stack (2), have at least one edge-side cutout (23) through which in each case at least one electrically conductive contact element (25) of the respective cell unit (3) protrudes.

8. Energy store according to one of the preceding claims, **characterized in that** the cell units (3) are adhesively bonded into the respective cooling unit (16).

9. Energy store according to one of the preceding claims, **characterized by** at least one plate-like contact-making part (12) which is associated with the first end side (8) of the cell stack (2) and has a plurality of in particular slot-like cutouts (28, 29) for receiving in each case one of the contact elements (25).

10. Energy store according to one of the preceding claims, **characterized in that** the contact-making part (12) has a plastic frame (26) and a plurality of electrically conductive contact parts (27) that are arranged in/on the said plastic frame.

11. Energy store according to one of the preceding claims, **characterized in that** the contact parts (27) are encapsulated by injection-moulding with the plastic frame (26).

12. Energy store according to one of the preceding claims, **characterized in that** the cell holders (15, 16) are designed to be so high that a cell unit (3) is spaced apart from a heat sink (17) that is situated above it.

## Revendications

1. Accumulateur d'énergie (1), en particulier accumulateur d'énergie à haute tension, destiné à des véhicules automobiles et comprenant un empilement de cellules (2) comportant une pluralité d'unités de montage (13) empilées les unes sur les autres, chaque unité de montage (13) comportant une unité de cellule (3) et deux supports de cellule (15, 16) en matière synthétique, les supports de cellule (15, 16) étant chacun disposés entre deux unités de cellule (3), placées l'une sur l'autre, pour maintenir et orienter les unités de cellule empilées (3) sur chaque côté frontal (8, 9) des unités de cellule (3), et comprenant au moins un dissipateur thermique (10, 17) en forme de plaque, l'au moins un dissipateur thermique (17) étant disposé à l'intérieur de l'empilement de cellules (2) au niveau d'au moins une des unités de cellule (3), **caractérisé en ce que** l'un des dissipateurs thermiques (17) est disposé uniquement au niveau d'une unité de cellule (3) sur deux de l'empilement de cellules (2) de sorte que seulement une unité de montage (13) sur deux comporte un dissipateur thermique (17) et chaque unité de cellule (3) de l'empilement de cellules (2) peut être directement refroidie par un seul dissipateur thermique (17).

2. Accumulateur d'énergie selon la revendication 1, **caractérisé en ce qu'**un dissipateur thermique (17) en forme de plaque est disposé à l'intérieur de l'empilement de cellules au niveau d'une pluralité d'unités de cellule (3).

3. Accumulateur d'énergie selon l'une des revendications 1 et 2, **caractérisé en ce qu'**un support de cellule (15, 16) est fixé à l'une des deux extrémités avant (8', 9') de l'un des dissipateurs thermiques (17) de sorte que le dissipateur thermique respectif (17) est disposé entre deux unités de cellule placées l'une sur l'autre.

4. Accumulateur d'énergie selon l'une des revendications précédentes, **caractérisé en ce que** les supports de cellule (15, 16) sont moulés par injection sur le dissipateur thermique respectif (17).

5. Accumulateur d'énergie selon l'une des revendications précédentes, **caractérisé en ce que** les supports de cellule (15, 16) forment avec le dissipateur thermique respectif (17) une unité de refroidissement (13) en sortie d'outil.

6. Accumulateur d'énergie selon l'une des revendications précédentes, **caractérisé en ce que** l'unité de refroidissement (13) est en forme de cuvette pour recevoir au moins en partie une unité de cellule (3).

7. Accumulateur d'énergie selon l'une des revendications précédentes, **caractérisé en ce qu'**au moins un des supports de cellule (16), notamment tous les supports de cellule (16) associés à un premier côté frontal (8) de l'empilement de cellules (2), comporte au moins un évidement côté bord (23) à travers lequel au moins un élément de contact électriquement conducteur (25) de l'unité de cellule respective (3) fait saillie.

8. Accumulateur d'énergie selon l'une des revendications précédentes, **caractérisé en ce que** les unités de cellule (3) sont collées dans l'unité de refroidissement respective (16).

9. Accumulateur d'énergie selon l'une des revendications précédentes, **caractérisé par** au moins un élément de contact (12) en forme de plaque qui est associé au premier côté frontal (8) de l'empilement de cellules (2) et une pluralité d'évidements (28, 29), notamment en forme de fente, destinés à recevoir chacun l'un des éléments de contact (25).

10. Accumulateur d'énergie selon l'une des revendications précédentes, **caractérisé en ce que** l'élément de contact (12) comporte un cadre (26) en matière synthétique et une pluralité d'éléments de contact électriquement conducteurs (27) disposés à l'intérieur de celui-ci/sur celui-ci.

11. Accumulateur d'énergie selon l'une des revendications précédentes, **caractérisé en ce que** les éléments de contact (27) sont enrobés par le cadre (26) en matière synthétique.

12. Accumulateur d'énergie selon l'une des revendications précédentes, **caractérisé en ce que** les supports de cellule (15, 16) sont conçus avec une hauteur telle qu'une unité de cellule (3) est espacée d'un dissipateur thermique (17) sus-jacent.
